# EUROPEAN PATENT APPLICATION

(11) **EP 1 594 232 A1**
(43) Date of publication of application: **09.11.2005**
(21) Application number: 05009807.8
(22) Date of filing: 04.05.2005
(51) Int. Cl.: H04B 1/16

(54) **Method for operating power source of mobile communication terminal**

(30) Priority: 06.05.2004 KR 2004031892
(71) Applicant: LG ELECTRONICS INC., Seoul (KR)
(72) Inventor: Yang, Bu-Young, Seoul (KR)
(74) Representative: Urner, Peter

(57) **Abstract**

In a method for operating a power source of a mobile communication terminal, when a user selects a module, the mobile communication terminal allows the user to be informed in advance whether the corresponding function can be executed or not by comparing the total consumption current for operating the corresponding module with a supply of available current and notifies the user whether or not the selected module can be operated. By notifying the user in advance whether the selected module can be operated or not, the terminal can be prevented from being suddenly turned off and the power source can be effectively used.

## Description

### BACKGROUND OF THE INVENTION

### 1. Field of the Invention

The present invention relates to a mobile communication terminal, and more particularly, to a method for optimally operating battery power of mobile communication terminal.

### 2. Description of the Background Art

In general, a mobile communication service provider provides a user with functions related to communication functions including wireless Internet connections, text and multimedia messaging, wireless on-line gaming, and the like. Also, a mobile communication terminal manufacturer provides the user with functions that are performed by the terminal itself without being related to the communication functions, such as a phone-book, a memo, a schedule organizer, and the like.

In order to use such functions, modules dedicated to perform the specified services are normally provided in the terminal. For example, the terminal may include an RF module for performing wireless communications services, a camera module for capturing images, an LCD module for outputting images and characters, and so on. The terminal may also include a wireless LAN, FM Radio, Bluetooth, and the like.

With multiple functions being provided, multiple modules are typically mounted within the terminal requiring a complicated construction. Also, the amount of power, and more specifically electrical current, consumed by the terminal increases as more functions are added.

An example of a module that consumes a large amount of current in a mobile communication terminal (hereinafter called a "Terminal") is a color display unit. The color display unit may consume three times more power than a black and white display unit.

In general, different modules consume different amounts currents. As power is consumed by the modules, the voltage of a battery supplying the current correspondingly drops. When the battery voltage drops below a certain level due to power consumption by the modules, power is usually turned off to prevent the modules from malfunctioning and/or from being damaged.

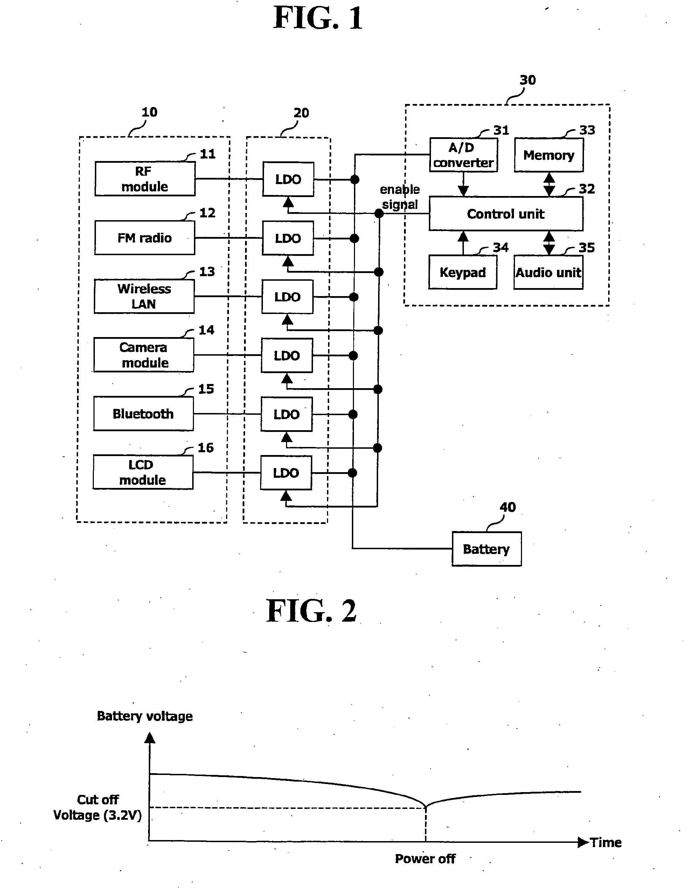

Figure 1 is a block diagram illustrating a related art apparatus for operating a power source of a mobile communication terminal.

As shown in Figure 1, the related art apparatus includes an application circuit 10, a voltage control unit 20, a main circuit 30, and a battery 40.

The application circuit 10 includes at least one module, for example, an RF module 11, FM Radio 12, a wireless LAN 13, a camera module 14, a Bluetooth module 15 and an LCD module 16 to provide services to the user.

The voltage control unit 20 includes a plurality of low drop output regulators (LDOs) 21-26 connected to each of the modules in the application circuit 10. Each LDO is connected to the battery 40 and maintains a voltage level appropriate to the correspondingly connected module. The maintenance of the voltage level of the LDOs is under the control of the main circuit 30.

The main circuit 30 includes an A/D converter 31 for converting the voltage level of the battery 40 into a digital signal, a control unit 32 for controlling each LDO, a memory 33, a keypad 34, and an audio unit 35. The control unit 32 controls each LDO based on the voltage level of the battery 40 as indicated by the digital signal output by the A/D converter 31.

An operation of the related art apparatus will be described as follows.

As shown in Figure 1, the power (current) necessary for operating each module of the application circuit 10 is supplied from the battery 40 through the corresponding LDO. Constant voltage and constant current are normally necessary to operate each module. For example, the RF module may require 200 mA of current nominally at 3.2 V for operation. If the battery 40 is drained, the needed constant voltage and constant current cannot be maintained.

The related art apparatus turns off the terminal if the battery voltage level drops below a certain level - the cutoff voltage. For example, the voltage level of the battery 40 can be checked periodically through the A/D converter 31 as shown in Figure 2. If the voltage of the battery 40 drops below the cut off level, 3.2 V for example, the control unit 32 in the main circuit 30 unconditionally turns off the terminal to prevent malfunctions and/or damages.

However, if the terminal is unconditionally turned off as described above, the following problems can occur.

When the user selects a specific module through the keypad 34, i.e. when the user selects a specific function, the control unit 32 unconditionally turns on the selected module by outputting a module enable signal. If the selected module consumes a small amount of current, little to no problem may occur since the voltage drop may be insignificant and thus still may be within the tolerance of the selected module. However, if the selected module consumes a significant amount of current, the corresponding battery voltage drop may be significant and thus be outside of the tolerance of the selected module. This problem is generated because the voltage drop of the battery caused by the selected module is not accounted for in the related art apparatus.

For example, the user may intend to make a call and/or listen to the radio when the battery voltage has dropped to at or near the cut off level. Indeed, it may be that the terminal has been automatically turned off. When the radio, which consumes a small amount of current is selected, a small voltage drop occurs and the radio may be operated. On the other hand, when the RF module, which consumes a large amount of current is selected, a large voltage drop occurs, perhaps to below the cut off voltage.

### SUMMARY OF THE INVENTION

Therefore, an object of the present invention is to provide a method for operating a power source of a mobile communication terminal capable of optimally using battery power.

Another object of the present invention is to provide a method for operating a power source of a mobile communication terminal enabling to operate a specific module by predicting voltage sag of the battery caused by each module.

To achieve these and other advantages and in accordance with the purpose of the present invention, as embodied and broadly described herein, a method for operating a power source of a mobile communication terminal, includes checking a total consumption current for operating a selected module when the user selects the selected module; checking supply of available current of a battery; and notifying the user whether or not the selected module can be operated, based on a comparison of the current consumed by the selected module and the available current of the battery.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a block diagram illustrating an apparatus for operating a power source of a mobile communication terminal in accordance with the background art;
Figure 2 is a diagram illustrating a cut off voltage of a battery in accordance with the background art; and
Figure 3 is a flowchart illustrating an apparatus for operating a power source of a mobile communication terminal in accordance with an embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

An aspect of the present invention is to determine whether to turn on or turn off a selected module by comparing an amount of current which can be supplied from battery with an amount of current consumed by each module.

An apparatus for operating a power source in a mobile communication terminal in accordance with an embodiment of the present invention may also be described with reference to Figure 1. However, the embodiment also includes the memory 33 and the data stored therein.

As shown in Table 1 and Table 2, a supply of available current, i.e., the amount of current that is capable of being supplied by the battery for each battery voltage level and the amount of current consumed for each module may be stored in the memory 33 in a table form. In Table 1, the voltage level listed in the first column are all assumed to be above the cut off voltage. In this example, the cut off voltage is assumed to be 3.2 volts.

**Table 1 -**

| Supply of available current for each battery voltage level | |
|---|---|
| Battery voltage (V) | Supply of available Current (mA) |
| 4 | 1000 |
| 3.9 | 800 |
| 3.8 | 700 |
| 3.7 | 600 |
| 3.6 | 500 |
| 3.5 | 300 |
| 3.4 | 100 |
| 3.3 | 50 |

**Table 2 -**

| Consumption current for each type of module | |
|---|---|
| Module | Current consumed (mA) |
| Main circuit | 30 |
| R/F module | 200 |
| Wireless LAN | 160 |
| Camera module | 150 |
| Blue tooth | 100 |
| LCD module | 60 |
| FM radio | 50 |
| Sub LCD | 1 |

When a module is selected to be operated, the control unit 32 may compare the current values stored in Table 1 and Table 2. If the selected module consumes less current than supply of available current from the battery, then the control unit 32 may enable the selected module to be operated. If the selected module consumes more current than the available supply, the control unit 32 may inform the user that the corresponding module cannot be operated.

Note that other module or modules may already be operating and thus already consuming a certain amount of current. The control unit 32 may take this into account. In other words, the control unit 32 may calculate the actual supply of available current as being a difference of the supply of current capable of being supplied at a particular voltage level of the battery (from Table 1) and the current required by the selected module (from Table 2). For example, the main circuit may always be operating and thus 30 mA of current may always be consumed.

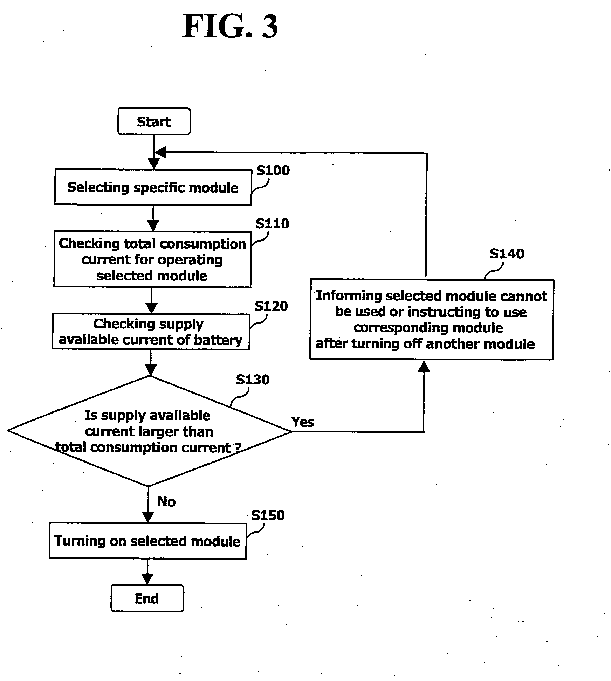

Hereinafter, with reference to Figure 3, a method for operating a power source of the mobile communication terminal in accordance with an embodiment of the present invention will be described in detail.

When the user selects a specific operation of the terminal through the keypad 34, the control unit 32 may select a module for performing the corresponding operation (S100). The control unit 32 may determine the current required for operating the selected module by reading consumption current for each module from Table 2 from the memory 33 (S110). In addition, the control unit 32 may detect the voltage level of the battery 40, for example based on the output value from the A/D converter 31. The control unit 32 may then determine the supply of available current, i.e. the amount of current capable of being supplied, corresponding to the detected battery voltage level from Table 1 (S120).

The control unit 32 may check whether the total consumption current of all modules presently operating plus the amount of current required by the selected module exceeds the supply of available current of the battery 40 (S130). If the total consumption current exceeds the supply of available current from the battery 40, the control unit 32 may then inform the user that the selected module cannot be operated (S140). If the total consumption current does not exceed the supply current of the battery 40, the control unit 32 may turn on the selected module, for example by outputting an enable signal through the corresponding LDO (S150).

As an illustration, assume that the main circuit 30 is is always operated and that the battery voltage is 3.4V. In such a circumstance, the supply of available current of the battery 40 is 100 mA. If the user selects the wireless LAN 13, then the total current required is 190 mA [main circuit (30 mA) + wireless LAN (160 mA)], which exceeds the available current.

Accordingly, when the user intends to use the wireless LAN 13, the control unit 32 informs the user, visually on a display unit (LCD) or by auditory means such as a speaker, that the wireless LAN 13 cannot be used. At this point, the user may turn off one or more of the presently operating modules so that the specific module may be operated. The user may be provided with an ordered list of presently operating modules so that the user may easily choose. The ordered list may be based on a priority that is predetermined. The predetermined priority may be set as a factory default that is changeable by the user.

On the other hand, if the user intends to use the FM Radio 12, the total amount of current required is 80 mA [main circuit (30 mA) + FM Radio (50 mA)]. Under this circumstance, the control unit 32 may immediately operate the FM Radio.

It may be that at step S140, i.e. when the total required current of the selected module and the presently operating modules exceed the supply of available current of the battery 40, the control unit 32 may automatically turn off one or more presently operating modules and then display a message instructing the user to use the currently selected module (S140). In such a case, the modules currently being operated may be sequentially turned off based on a priority as described above.

For example, assume that the battery voltage is 3.5 V. Then the supply of available current of the battery 40 is 300 mA. Also assume that in addition to the main circuit 30, the Bluetooth module 15 is presently being utilized and the user receives a telephone call. If the user elects to answer the call, the total amount of current required becomes 330 mA [main circuit (30 mA) + Bluetooth (100 mA) + RF module (200 mA)].

Accordingly, the total amount of required current (330mA) to operate the Bluetooth 15 and the RF module 11 exceeds the supply of available current (300 mA) from the battery 40. Under this circumstance, the control unit 32 may disable the Bluetooth module 15 and display a message instructing the user to use the telephone. The Bluetooth module 15 may be of lower priority than the main circuit 30.

As described thus far, the embodiment present invention allows an effective use of battery power by optimally operating modules through comparison of required consumption current for each type of module with the supply of available current. The embodiment of the present invention also enables the battery life to be extended.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method for operating a power source of a mobile communication terminal, comprising:
determining a current required for operating a module when a user selects the module for operation;
determining supply of available current from a battery; and
determining whether or not the module can be operated based on the current required for operating the module and the supply of available current from the battery.

2. The method of claim 1, further comprising:
providing information to the user that the module cannot be operated when the current required for operating the module exceeds the supply of available current from the battery.

3. The method of claim 1, further comprising:
enabling the module when the current required for operating the module does not exceed the supply of available current from the battery.

4. The method of claim 1, further comprising:
disabling one or more other presently operating modules when the current required for operating the module exceeds the supply of available current from the battery; and
providing information to a user that the module can be operated.

5. The method of claim 4, wherein the one or more other presently operating modules are disabled according to a priority.

6. The method of claim 1, wherein the step of determining the current required for operating the module comprises:
reading a required current for each type of module from a memory.

7. The method of claim 1, wherein the step of determining the supply of available current from the battery comprises:
measuring a voltage level of the battery; and
reading an available current value corresponding to the measured battery voltage level from a memory.

8. The method of claim 1, further comprising:
notifying the user either visually or through auditory means whether or not the module can be operated based on the result of the step of determining whether or not the module can be operated.

9. A method for operating a power source of a mobile communication terminal, comprising:
determining a current required for operating a specific module by reading a required current from a memory based a type of module corresponding to the specific module;
measuring a voltage of a battery and reading a supply of available current from the battery corresponding to the measured voltage from the memory; and
notifying a user that the specific module cannot be operated when the current required for operating the specific module exceeds the supply of available current from the battery.

10. The method of claim 9, wherein the notifying step further comprises:
notifying the user either visually or through auditory means.

11. A method for controlling a power consumption of a mobile communication terminal wherein the mobile communication terminal includes a plurality of separately operable modules, the method comprising:
determining a current amount required for operating a selected module;
determining an amount of available current from a battery;
determining whether the selected module may be operated based on the current amount required and the amount of available current; and
enabling the selected module if it is determined that the selected module may be operated.

12. The method of claim 11, wherein the step of determining the current amount required for operating the selected module comprises:
determining a type of module corresponding to the selected module; and
reading from a memory the current amount required corresponding to the module type of the selected module, wherein the memory includes information regarding a plurality of module types and a corresponding plurality of current amount required.

13. The method of claim 11, wherein the step of determining the amount of available current from the battery comprises:
detecting a voltage level of the battery;
determining a current delivery capability of the battery based on the voltage level of the battery; and
determining a difference between the current delivery capability of the battery and a total amount of current being consumed by a totality of zero or more presently operating modules.

14. The method of claim 13, wherein the step of determining the current delivery capability of the battery based on the voltage level of the battery comprises:
reading from a memory the current delivery capability of the battery, wherein the memory includes information regarding a plurality of current delivery capabilities of the battery corresponding to a plurality of voltage levels of the battery.

15. The method of claim 11, wherein the step of determining whether the selected module may be operated based on the current amount required and the amount of available current comprises:
determining that the selected module may be operated if the amount of available current from the battery is greater than or equal to the current amount required by the selected module; and
determining that the selected module may not be operated if the amount of available current from the battery is less than the current amount required by the selected module.

16. The method of claim 11, further comprising:
notifying a user that the selected module cannot be operated if it is determined that the selected module may not be operated.

17. The method of claim 11, further comprising:
providing to the user a list of one or more presently operating modules that may be disabled so that the selected module may be operated if it is determined that the selected module may not be operated.

18. The method of claim 17, wherein the list of the one or more present operating modules is based on a priority.

19. The method of claim 18, wherein the priority is preset as a factory default or determined by the user.

20. The method of claim 11, further comprising:
disabling one or more presently operating modules; and
enabling the selected module after the one or more presently operating modules have been disabled.

21. The method of claim 20, wherein a decision to disable the one or more presently operating modules is based on a priority.

22. The method of claim 21, wherein the priority is preset as a factory default or determined by the user.
